# EUROPÄISCHE PATENTANMELDUNG

(11) **EP 0 636 388 A1**
(43) Veröffentlichungstag der Anmeldung: **01.02.1995**
(21) Anmeldenummer: 94110731.0
(22) Anmeldetag: 11.07.1994
(51) Int. Cl.: A62D 3/00, B01D 53/34

(54) **Verfahren zur Entsorgung von Halonen oder halonhaltigen Fluorkohlenwasserstoffen oder Fluorchlorkohlenwasserstoffen**

(30) Priorität: 24.07.1993 DE 4324908
(71) Anmelder: HOECHST AKTIENGESELLSCHAFT, D-65929 Frankfurt am Main (DE)
(72) Erfinder: Jansen, Rolf-Michael, Dr., D-65799 Kelkheim (DE); Auel, Theodor, Dr., D-65719 Hofheim (DE); Walz, Rüdiger, Dr., D-65779 Kelkheim (DE); Kaufmann, Wolf-Dietmar, Dr., D-61476 Kronberg (DE)

(57) **Zusammenfassung**

Die Erfindung betrifft ein Verfahren zur Entsorgung von Halonen oder halonhaltigen FKW oder FCKW, wobei man diese in Gegenwart einer Wasserstoffquelle thermisch oder photochemisch spaltet, das entstandene und HF, HBr, CO₂ und Wasser sowie gegebenenfalls HCl enthaltende Gas abkühlt und in einer Gaswaschkolonne die Halogenwasserstoffe in einer Waschflüssigkeit absorbiert und mit einer Base neutralisiert, sowie gegebenenfalls in dem Gas enthaltenes elementares Brom oder Chlor mit einem Reduktionsmittel zu den entsprechenden Salzen reduziert.

## Beschreibung

Die Erfindung betrifft ein Verfahren zur Entsorgung von Fluorbromkohlenwasserstoffen oder Fluorchlorbromkohlenwasserstoffen (im foglenden Halone genannt) oder deren Gemischen mit Fluorkohlenwasserstoffen (FKW) oder Fluorchlorkohlenwasserstoffen (FCKW).

Der Erfindung liegt die Aufgabe zugrunde, Halone zu entsorgen und dabei gleichzeitig wiederverwertbare Produkte, beispielsweise eine konzentrierte bromhaltige Salzsole, aus der man dann elementares Brom, Kaliumfluorid und Kaliumchlorid gewinnen kann, zu erhalten. Obwohl bei den Produzenten von halonhaltigen Feuerlöschmitteln ein Entsorgungsnotstand entstanden ist, wurde bisher noch kein Verfahren bekannt, das diesen Forderungen gerecht wird, und das Problem löst, die z.B. bei einer thermischen Spaltung von Halonen entstehenden extrem korrosiven Produkte voneinander abzutrennen.

Es wurde nun überraschenderweise gefunden, daß die obige Aufgabe dadurch gelöst wird, daß man Halone oder halonhaltige FKW oder halonhaltige FCKW beispielsweise mittels einer Knallgasflamme thermisch spaltet, den dabei gebildeten Gasstrom abkühlt und das bei der Spaltung entstandene HF und HBr, sowie gegebenenfalls entstandenes HCl (bei Einsatz von Fluorchlorbromkohlenwasserstoffen oder von Halonen im Gemisch mit Fluorchlorkohlenwasserstoffen), aus dem Gasstrom in einer Gaswaschkolonne absorbiert und die dabei entstehenden Säuren mit einer Base neutralisiert. Dabei wird zusätzlich, wenn nötig, noch ein Reduktionsmittel zugesetzt, um eventuell bei der thermischen Spaltung entstandenes elementares Chlor oder Brom zu den entsprechenden Salzen zu reduzieren.

Ein Gegenstand der Erfindung ist demgemäß ein Verfahren zur Entsorgung von Halonen (Fluorbromkohlenwasserstoffen oder Fluorchlorbromkohlenwasserstoffen) oder deren Gemischen mit Fluorkohlenwasserstoffen (FKW) oder Fluorchlorkohlenwasserstoffen (FCKW), dadurch gekennzeichnet, daß man
a) die Halone oder deren Gemische mit FKW oder FCKW in Gegenwart einer Wasserstoffquelle thermisch oder photochemisch spaltet
b) das in Schritt a) entstandene und HF, HBr, CO₂ und Wasser, sowie gegebenenfalls HCl, enthaltende Gas auf 5 - 50°C abkühlt
c) aus dem in Schritt b) erhaltenen Gas in einer Gaswaschkolonne die Halogenwasserstoffe in einer Waschflüssigkeit absorbiert und mit einer Base neutralisiert, sowie gegebenenfalls in dem Gas enthaltenes elementares Brom oder Chlor mit einem Reduktionsmittel zu den entsprechenden Salzen reduziert, wobei man die Waschflüssigkeit und das Gas in der Mitte der Gaswaschkolonne einspeist und die Base und ggf. das Reduktionsmittel am Kopf der Gaswaschkolonne zuführt und wobei man am Kopf der Gaswaschkolonne ein halogenwasserstofffreies Gas abzieht und am Sumpf der Gaswaschkolonne eine Salzsole abzieht.

Die erfindungsgemäß entsorgten Halone (Fluorbromkohlenwasserstoffe oder Fluorchlorbromkohlenwasserstoffen) haben im allgemeinen 1 bis 3 C-Atome. Sie können vollständig oder teilweise halogeniert sein.

Die Halone können einzeln oder miteinander gemischt vorliegen oder in Gemischen mit FKW oder FCKW oder beiden. Die FKW und FCKW haben im allgemeinen 1 bis 6 C-Atome und können vollständig oder teilweise halogeniert sein.

In Schritt a) wird als Wasserstoffquelle vorzugsweise Wasserstoff selbst oder ein Kohlenwasserstoff eingesetzt. Die thermische Spaltung wird vorzugsweise in einem Spaltreaktor vorgenommen, wie er in EP-A-0 212 410 beschrieben ist.

In Schritt b) wird das in Schritt a) entstandene und HF, HBr, CO₂ und Wasser (sowie bei Einsatz von Fluorchlorkohlenwasserstoffen oder Fluorchlorbromkohlenwasserstoffen zusätzlich HCl) enthaltende Gas auf 5 - 50°C, vorzugsweise 5 - 30°C abgekühlt.

Die in Schritt c) verwendete Gaswaschkolonne ist vorzugsweise zweistufig, wobei man die Waschflüssigkeit und das in Schritt a) entstandene Gas am Kopf der ersten Stufe einspeist und die Base und ggf. das Reduktionsmittel am Kopf der zweiten Stufe zuführt. Die Gaswaschkolonne kann bei Normal-, Unter- oder Überdruck, isotherm oder adiabatisch betrieben werden. Vorzugsweise arbeitet man adiabatisch, insbesondere bei Normaldruck.

Die Gaswaschkolonne wird vorzugsweise so betrieben, daß die aus dem Sumpf austretende Salzsole einen pH von 5 - 8,4 ,vorzugsweise 6 - 6,5 aufweist und der Salzgehalt 20 - 50 Gew.-%, vorzugsweise 30 - 40 Gew.-% ist.

Die in Schritt c) verwendete Waschflüssigkeit kann Wasser oder eine verdünnte Alkalihydroxid-, Erdalkalihydroxid-, Alkalicarbonat-, Erdalkalicarbonat-, Alkalihydrogencarbonat- oder Erdalkalihydrogencarbonat-Lösung sein oder eine verdünnte Salzsolelösung, die eine ähnliche Zusammensetzung aufweist, wie die aus dem Sumpf der Gaswaschkolonne austretende Salzsole.

Als Reduktionsmittel sind wäßrige Lösungen von Alkaliformiat, Alkalihydrogensulfit, Hydrazin oder Schwefeldioxid-Gas geeignet, vorzugsweise von Natrium- oder Kaliumformiat. Der Zusatz eines Reduktionsmittels ist nur erforderlich, wenn das in Schritt a) entstandene Gas tatsächlich Br₂ und/oder Cl₂ enthält, was man durch Analyse leicht feststellen kann.

Als Base kann Alkali- oder Erdalkalihydroxid, Alkali- oder Erdalkalicarbonat oder -hydrogencarbonat, vorzugsweise Natrium- oder Kaliumhydroxid oder -carbonat, verwendet werden.

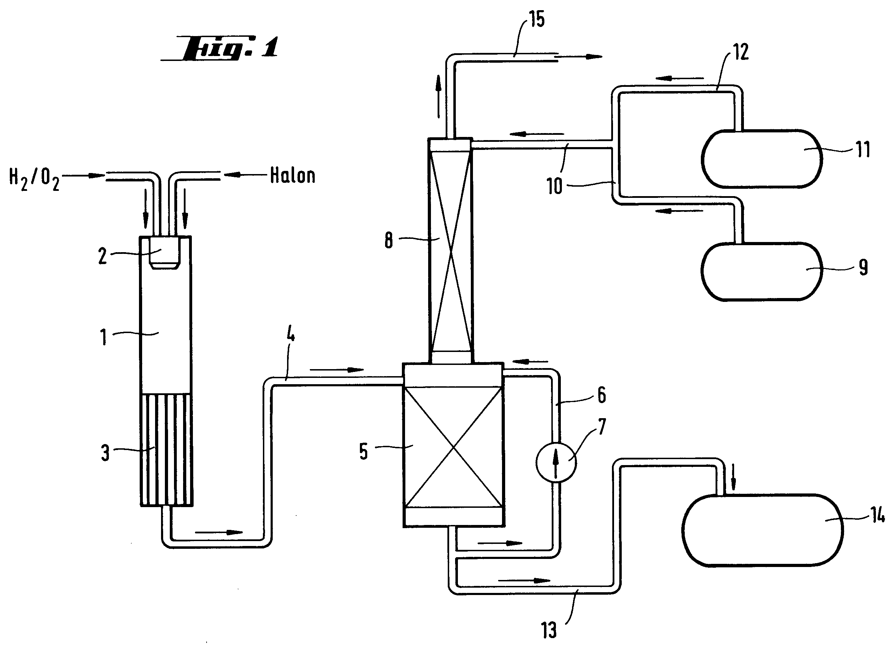

Die Erfindung soll durch das folgende Beispiel und Figur 1 näher erläutert werden.

### Beispiel 1

Die Spaltung gemäß Schritt a) wurde in einem ®Diabon-Rohr (1) (Länge = 800 mm, Durchmesser = 48 mm) durchgeführt, das am oberen Ende mit einer Brennerdüse (2) mit elektrischer Zündung versehen war. Es wurden 100 g/h Halon-FCKW-Gemisch (40 Gew.-% Dichlordifluormethan R 12, 50 Gew.-% Trichlorfluormethan R 11, 10 Gew.-% Trifluorbrommethan Halon 13B1) mit Hilfe von Knallgas (35 l/h H₂, 10,5 l/h O₂) gespalten. An das untere Ende des Diabon-Rohrs (1) war ein Plattenwärmetauscher (3) (Länge = 400 mm) aus Diabon angesetzt, in dem die heißen Spaltgase auf Raumtemperatur abgekühlt wurden. Die abgekühlten Gase wurden dann über Leitung (4) in den Kopf der Kolonne (5) (Länge = 400 mm; Durchmesser = 100 mm; mit PTFE ausgekleidete Stahlkolonne mit seitlichem Zulaufstutzen und 4 mm PP-Raschigringen als Füllkörpern) die als erste Stufe einer zweistufigen Wäsche diente, geleitet. Zu Beginn des Experiments wurde über Leitung (6) mit einer Pumpe (7) Wasser umgepumpt (ca. 2000 ml/h). Auf die Kolonne (5) war eine zweite Kolonne (8) (Länge = 1000 mm; Durchmesser = 50 mm; mit PTFE ausgekleidete Stahlkolonne mit seitlichem Zulaufstutzen und 4 mm PP-Raschigringen als Füllkörpern) als zweite Stufe aufgesetzt. Auf den Kopf der Kolonne (8) wurde aus dem Vorratsgefäß (9) 30 gew.-%ige wäßrige KOH (ca. 300 ml/h) über Leitung (10) und aus dem Vorratsgefäß (11) 10 gew.-%ige wäßrige Kaliumformiat-Lösung (ca. 30 ml/h) über Leitung (12) und (10) zudosiert. Die Dosierung erfolgte pH- und elektropotentialgesteuert (Messung am Ausgang der Kolonne (8)). Nachdem 100 g Halon-FCKW-Gemisch durchgesetzt worden waren, wurde damit begonnen, kontinuierlich einen Teil (ca. 330 ml/h) des Sumpfes der Kolonne (5) über Leitung (13) in das Vorratsgefäß (14) abzulassen. Die ablaufende Salzsole hatte einen Salzgehalt von ca. 30 - 35 Gew.-%. Elementares Brom und Chlor sowie Hypobromit, Hypochlorit, Bromat und Chlorat waren analytisch nicht nachweisbar. Der Carbonat- und Hydrogencarbonatanteil war unter 0,1 Gew.-% bei einem pH-Wert der Salzsole von 6,5. Am Kopf der Kolonne (8) trat CO₂ über Leitung (15) aus.

## Patentansprüche

1. Verfahren zur Entsorgung von Halonen (Fluorbromkohlenwasserstoffen oder Fluorchlorbromkohlenwasserstoffen) oder deren Gemischen mit Fluorkohlenwasserstoffen (FKW) oder Fluorchlorkohlenwasserstoffen (FCKW), dadurch gekennzeichnet, daß man
a) die Halone oder deren Gemische mit FKW oder FCKW in Gegenwart einer Wasserstoffquelle thermisch oder photochemisch spaltet
b) das in Schritt entstandene und HF, HBr, CO₂ und Wasser sowie gegebenenfalls HCl enthaltende Gas auf 5 - 50°C abkühlt
c) aus dem in Schritt b) erhaltenen Gas in einer Gaswaschkolonne die Halogenwasserstoffe in einer Waschflüssigkeit absorbiert und mit einer Base neutralisiert, sowie gegebenenfalls in dem Gas enthaltenes elementares Brom oder Chlor mit einem Reduktionsmittel zu den entsprechenden Salzen reduziert, wobei man die Waschflüssigkeit und das Gas in der Mitte der Gaswaschkolonne einspeist und die Base und ggf. das Reduktionsmittel am Kopf der Gaswaschkolonne zuführt und wobei man am Kopf der Gaswaschkolonne ein halogenwasserstofffreies Gas abzieht und am Sumpf der Gaswaschkolonne eine Salzsole abzieht.

2. Verfahren nach Anspruch 1, dadurch gekennzeichnet, daß die Halone 1 bis 3 C-Atome haben.

3. Verfahren nach Anspruch 1 oder 2, dadurch gekennzeichnet, daß die FKW oder FCKW 1 bis 6 C-Atome haben.

4. Verfahren nach einem der Ansprüche 1 bis 3, dadurch gekennzeichnet, daß die in Schritt c) verwendete Gaswaschkolonne adiabatisch betrieben wird.

5. Verfahren nach einem der Ansprüche 1 bis 4, dadurch gekennzeichnet, daß die in Schritt c) verwendete Gaswaschkolonne so betrieben wird, daß die am Sumpf der ersten Stufe austretende Salzsole einen pH-Wert von 5 - 8,4 aufweist.

6. Verfahren nach einem der Ansprüche 1 bis 4, dadurch gekennzeichnet, daß die in Schritt c) verwendete Gaswaschkolonne so betrieben wird, daß die am Sumpf der ersten Stufe austretende Salzsole einen Salzgehalt von 30 - 40 Gew.-% hat.

7. Verfahren nach einem der Ansprüche 1 bis 6, dadurch gekennzeichnet, daß die in Schritt c) verwendete Gaswaschkolonne zweistufig ist und die Waschflüssigkeit sowie das in Schritt a) entstandene Gas am Kopf der ersten Stufe eingespeist und die Base und gegebenenfalls das Reduktionsmittel am Kopf der zweiten Stufe zugeführt wird.
